# EUROPEAN PATENT SPECIFICATION

(11) **EP 1 860 717 B1**
(45) Date of publication and mention of the grant of the patent: **16.02.2011**
(21) Application number: 07009846.2
(22) Date of filing: 16.05.2007
(51) Int. Cl.: H01M 8/04

(54) **Fuel cell system having unreacted gas discharge pipeline**
Brennstoffzellensystem mit nichtumgesetzter Gasentladungspipeline
Système de pile à combustible avec pipeline d'évacuation de gaz inaltéré

(30) Priority: 23.05.2006 CN 200610080958
(43) Date of publication of application: 28.11.2007
(73) Proprietor: Asia Pacific Fuel Cell Technologies, Ltd., Chunan, Miaoli 350 (TW)
(72) Inventor: Yang, Jefferson YS, Organge CA 92869 (US); Hsiao, Feng-Hsiang, Taipei 110 (TW)
(74) Representative: Goddar, Heinz J.

(56) References cited:
- EP-A- 1 469 546
- WO-A-2005/062411
- DE-A1-102004 034 071
- FR-A1- 2 837 025

## Description

The present invention relates to a technique for treating unreacted gas discharged from a fuel cell stack, and more particularly to a fuel cell system having unreacted gas discharge pipeline associated with a humidifier.

### BACKGROUND OF THE INVENTION

A fuel cell is a power-generating unit that generates electrical energy through electrochemical reaction of hydrogen-containing fuel and air. Since the fuel cell has the advantages of low pollution, high efficiency, and high energy density, it has been positively researched, developed, and promoted in many countries. Among others, the proton exchange membrane fuel cell (PEMFC) is the most industrially valuable product due to its low operating temperature, quick activation, and high energy density.

In the fuel cell, hydrogen ions move from the anode to the cathode to complete the electrochemical reaction. The performance of a fuel cell has close relation to different operating conditions, such as temperature, humidity, hydrogen flow, air flow, etc. Regarding the humidity, it is necessary to keep a high molecular proton exchange membrane in the fuel cell at proper operating humidity for the fuel cell to achieve high performance. Meanwhile, the fuel cell must also be maintained at a proper operating temperature.

To maintain the fuel cell at proper operating humidity and temperature, one of the currently adopted ways is to provide the reactant gas supply pipelines of the fuel cell with a humidifier associated with a cooling water system. With this arrangement, cooling water is supplied from the cooling water system to cool the fuel cell and then discharged from the fuel cell. The discharged cooling water has a high temperature about 60 to 70°C, and is led to the humidifier to increase the humidity and temperature of the reactant gas passed through the humidifier before the reactant gas is supplied to the fuel cell. For example, fresh air or oxygen is sent by an air blower to the humidifier before being led to the fuel cell via an oxygen inlet port thereof, so that the air flown into the fuel cell has a proper humidity.

While the technique of providing a humidifier to regulate the humidity of the reactant gas for the fuel cell has become matured, there is not any technical teaching or suggestion on using a humidifier to treat the unreacted gas discharged from the fuel cell.

Another important issue about the fuel cell is the unreacted hydrogen discharged from the fuel cell. Unlike the unreacted oxygen that can be directly discharged into ambient air, the unreacted hydrogen is highly dangerous and subject to self-combustion and explosion when a local concentration of the discharged unreacted hydrogen exceeds 4%. Therefore proper measures must be taken to treat the unreacted hydrogen discharged from the fuel cell. In a currently adopted way, the unreacted hydrogen is led back to the fuel cell and recycled. However, the recycled hydrogen as reactant gas has reduced purity to possibly cause the poisoning problem. One way to solve the above purity and poisoning problems is to recycle only part of the discharged unreacted hydrogen. The remaining part of the discharged unreacted hydrogen is led to a catalytic converter and treated before being discharged into ambient air. However, the catalytic converter requires additional and quite high cost.

FR 2 837 025 discloses a humidification system for fuel cell system. In the fuel cell system, the air flows out of the fuel cell stack is transported to a condenser and a phase separator to separate the water from the air. The water is recycled to use. Similar to most fuel cell system, the hydrogen gas flows out of the fuel cell stack is discharged directly into the surroundings.

EP 1469546A2 discloses a fuel cell system which comprises: a fuel cell having a fuel electrode and an air electrode; an air supply section supplying air to the air electrode; an air supply passage connecting the air supply section and the air electrode; an air exhaust passage expelling the air from the air electrode; a hydrogen supply section supplying fuel gas to the fuel electrode; a hydrogen supply passage connecting the hydrogen supply section and the fuel electrode; a hydrogen exhaust passage expelling hydrogen from the fuel electrode; and a first steam permeating humidifier disposed between the hydrogen exhaust passage and the air supply passage to transfer moisture, present in the hydrogen exhaust passage, to the air in the air supply passage. The fuel cell system includes a hydrogen recirculation path through which part of the exhaust hydrogen in the hydrogen exhaust passage is returned to the hydrogen supply passage, while the other part of the hydrogen is directly exhausted into the surroundings from the hydrogen exhaust passage and may cause dangers.

DE 10 2004 034 071A1 discloses a fuel cell system which includes an anode gas recirculation passage and an air recirculation passage. With the anode gas recirculation passage, part of the hydrogen discharged from of the fuel cell stack is recycled to the humidifier, while the rest of the hydrogen discharged from the fuel cell stack is mixed with the air discharged from the fuel cell stack before it is exhausted to the surroundings. In the fuel cell system, the concentration of the exhausted hydrogen is diluted for some extents. However, the concentration of the hydrogen gas may vary in accordance with the performance of the fuel cell stack, and may reach a dangerous level some times.

### SUMMARY OF THE INVENTION

A primary object of the present invention is to provide a fuel cell system according to claim 1 having unreacted gas discharge pipeline associated with humidifier to modify the concentration of discharged hydrogen. So unreacted hydrogen is discharged from a fuel cell stack and its humidity is regulated at the humidifier. Thus, the unreacted hydrogen can be safely discharged into ambient air without causing potential danger.

Another object of the present invention is to provide a fuel cell system having an unreacted hydrogen discharge pipeline that replaces the catalytic converter used in conventional fuel cell stack for treating unreacted gas, so that the cost for treating the unreacted gas discharged from the fuel cell stack can be reduced.

To fulfill the above objects, the present invention provides a fuel cell system having unreacted gas discharge pipeline associated with humidifier. The fuel cell system comprises a fuel cell stack and a humidifier. The humidifier includes an unreacted gas inlet port connected to an end of an unreacted hydrogen discharge pipeline, which is connected at the other end to a hydrogen outlet port of the fuel cell stack, such that the unreacted hydrogen discharged from the fuel cell stack via the hydrogen outlet port is led by the unreacted hydrogen discharge pipeline into the humidifier. The humidifier regulates humidity and concentration of the unreacted hydrogen led thereinto, and the unreacted hydrogen is then discharged from the humidifier.

With the arrangements of the present invention, reactant gas is regulated at the humidifier to increase the humidity and temperature thereof before being supplied to the fuel cell stack, so that the fuel cell stack can be maintained at proper operating humidity and temperature. Moreover, a part of the unreacted hydrogen may be led back to the fuel cell stack and recycled while the other part of the unreacted hydrogen is led to the humidifier where the humidity of the unreacted hydrogen is regulated and the concentration of the unreacted hydrogen is diluted for safely discharging into ambient air. Therefore, the present invention enables reduced cost for treating unreacted gas discharged from the fuel cell stack.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:

**Fig. 1** is a block diagram of a fuel cell system having unreacted gas discharge pipeline associated with humidifier according to a first embodiment of the present invention;

**Fig. 2** is a block diagram of a fuel cell system having unreacted gas discharge pipeline associated with humidifier according to a second embodiment of the present invention; and

**Fig. 3** is a block diagram of a fuel cell system having unreacted gas discharge pipeline associated with humidifier according to a third embodiment of the present invention.

### DETAILED DESCRIPTION OF THE PREFERRED EMBODIMENTS

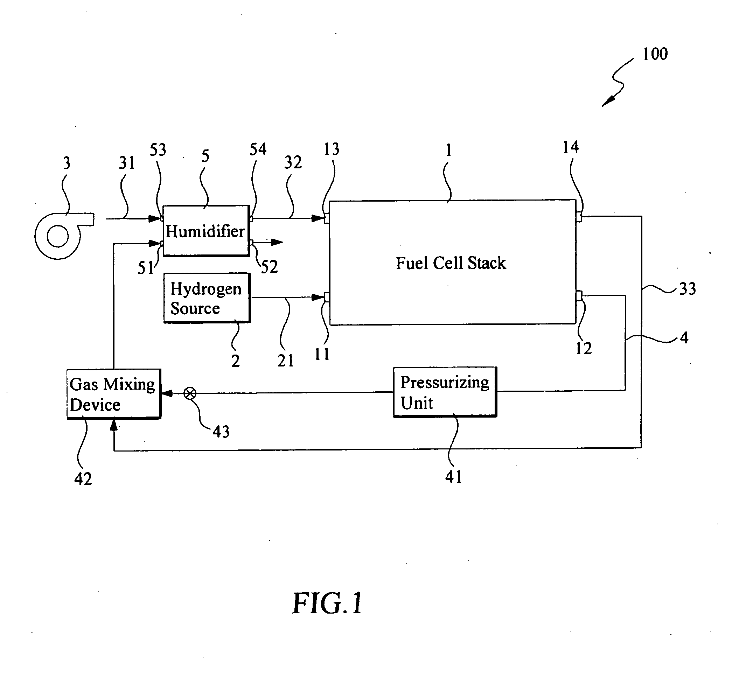

Please refer to **Fig. 1** that is a block diagram of a fuel cell system having unreacted gas discharge pipeline associated with humidifier according to a first embodiment of the present invention. As shown, the fuel cell system **100** includes a fuel cell stack **1,** a hydrogen source **2,** an oxygen source **3,** an unreacted hydrogen discharge pipeline **4,** and a humidifier **5.**

The fuel cell stack **1** includes a hydrogen inlet port **11.** A hydrogen supplying pipeline **21** is extended between and connected to the hydrogen source **2** and the hydrogen inlet port **11,** so that hydrogen supplied from the hydrogen source **2** is led into the fuel cell stack **1** via the hydrogen supplying pipeline **21** and the hydrogen inlet port **11.** The fuel cell stack **1** further includes a hydrogen outlet port **12,** via which unreacted hydrogen in discharged from the fuel cell stack **1;** an oxygen inlet port **13,** via which oxygen is fed into the fuel cell stack **1;** and an oxygen outlet port **14,** via which unreacted oxygen is discharged from the fuel cell stack **1.**

The unreacted hydrogen discharge pipeline **4** is connected at an end to the hydrogen outlet port **12** for leading the unreacted hydrogen discharged from the fuel cell stack **1** to the humidifier **5.** A pressurizing unit **41,** a gas mixing device **42,** and an unreacted hydrogen discharge control unit **43** are connected to the unreacted hydrogen discharge pipeline **4.** The pressurizing unit **41** applies appropriate pressure to the unreacted hydrogen to thereby increase a flow rate of the unreacted hydrogen. The unreacted hydrogen and unreacted oxygen discharged from the fuel cell stack **1** are led to the gas mixing device **42** to mix with each other therein. The unreacted hydrogen discharge control unit **43** controls the volume of unreacted hydrogen to be led into the gas mixing device **42.**

The humidifier **5** includes an unreacted gas inlet port **51,** to which the other end of the unreacted hydrogen discharge pipeline **4** is connected, so that the unreacted hydrogen discharged from the fuel cell stack **1** is finally led to the humidifier **5**; an unreacted gas outlet port **52**; an oxygen source inlet port 53 connected to the oxygen source **3** via an oxygen supply pipe **31,** so that oxygen supplied from the oxygen source **3** is led by the oxygen supply pipe **31** into the humidifier **5** via the oxygen source inlet port **53** for humidity regulation; and a humidified oxygen outlet port **54** connected to the oxygen inlet port **13** of the fuel cell stack **1** via an oxygen supplying pipeline **32,** so that oxygen having been humidified in the humidifier **5** is fed into the fuel cell stack **1** via the oxygen supplying pipeline **32** and the oxygen inlet port **13.**

The fuel cell system **100** further includes an unreacted oxygen discharge pipeline **33** extended between and connected to the oxygen outlet port **14** of the fuel cell stack **1** and the gas mixing device **42** on the unreacted hydrogen discharge pipeline **4,** so that unreacted oxygen discharged via the oxygen outlet port **14** is mixed with the discharged unreacted hydrogen in the gas mixing device **42.** The oxygen/hydrogen gas mixture is then led into the humidifier **5** via the unreacted gas inlet port **51.**

The oxygen supplied from the oxygen source **3** is relatively dry. The relatively dry oxygen from the oxygen source **3** is led into the humidifier **5** via the oxygen supply pipe **31** and regulated to become relatively humid. The relatively humid oxygen is then led from the humidifier **5** to the fuel cell stack **1** via the oxygen supplying pipeline **32.**

The humidifier **5** also regulates the humidity of the unreacted oxygen/hydrogen gas mixture led thereto from the gas mixing device **42.** The unreacted oxygen/hydrogen gas mixture is then discharged via the unreacted gas outlet port **52.**

By mixing the unreacted hydrogen with the unreacted oxygen in the gas mixing device **42,** the potentially dangerous unreacted hydrogen may have a reduced concentration. And by humidifier **5**, the concentration of the unreacted hydrogen is further reduced, in some practical applications of the present invention it is even to be reduced to less than 1%. The humidity of the unreacted hydrogen is also regulated to reduce the potential danger of hydrogen, allowing the unreacted hydrogen to be safely discharged into ambient air.

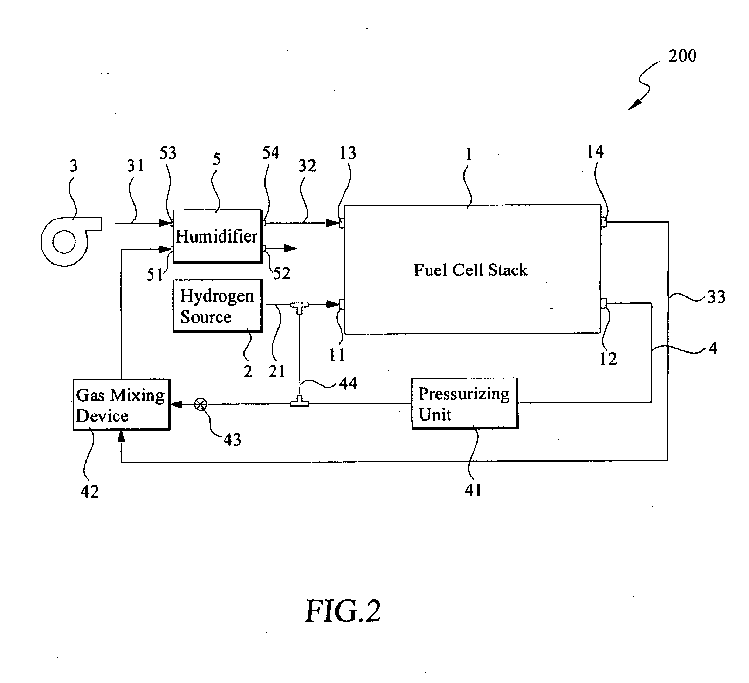

**Fig. 2** is a block diagram of a fuel cell system having unreacted gas discharge pipeline associated with humidifier according to a second embodiment of the present invention. As can be seen from **Fig. 2****,** the fuel cell system **200** in the second embodiment is generally structurally similar to the first embodiment, except for an unreacted hydrogen recycling pipeline **44** extended between and connected to the unreacted hydrogen discharge pipeline **4** and the hydrogen supplying pipeline **21.**

With the unreacted hydrogen recycling pipeline **44,** a part of the unreacted hydrogen discharged from the fuel cell stack **1** is led back to the fuel cell stack **1** via the hydrogen supplying pipeline **21** and recycled. The remaining part of the discharged unreacted hydrogen is still led to the gas mixing device **42** for mixing with the unreacted oxygen before being led to the humidifier **5** and discharged into ambient air.

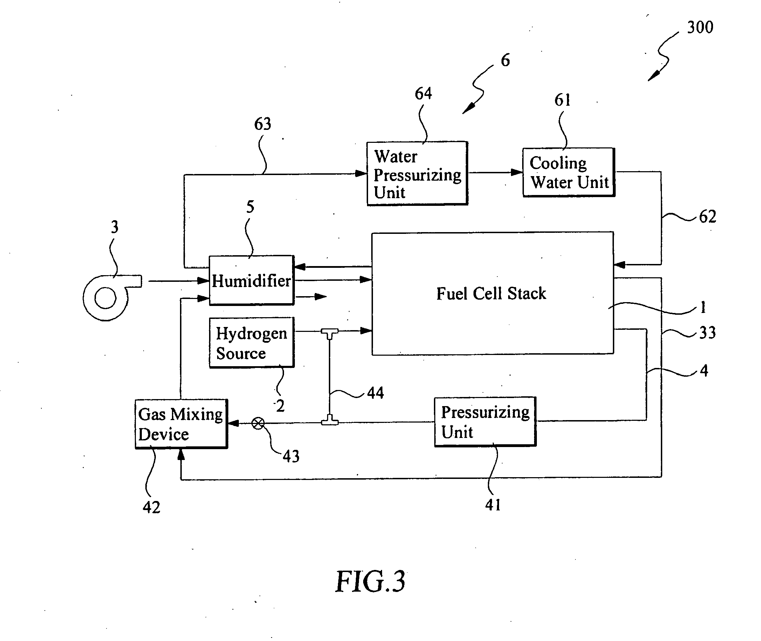

Please refer to **Fig. 3** that is a block diagram of a fuel cell system having unreacted gas discharge pipeline associated with humidifier according to a third embodiment of the present invention. As can be seen from **Fig. 3****,** the fuel cell system **300** in the third embodiment is generally structurally similar to the fuel cell system **200** in the second embodiment, except for a water cooling system **6.**

The water cooling system **6** includes a cooling water unit **61** and a water pressurizing unit **64.** The cooling water unit **61** is connected to the fuel cell stack **1** via a cooling water supplying pipeline **62,** so as to supply low temperature cooling water to the fuel cell stack **1** to lower the high temperature produced by the reaction in the fuel cell stack **1** and thereby maintains the fuel cell stack **1** in a normal operating state. The low temperature cooling water having been used to cool and then discharged from the fuel cell stack **1** has a high temperature. The high temperature cooling water is led to the humidifier **5** to serve as a high temperature water source thereof, so as to increase the humidity and temperature of the oxygen supplied from the oxygen source **3** to the humidifier 5, and to regulate the humidity of the unreacted oxygen/hydrogen gas mixture led from the gas mixing device **42** to the humidifier **5.** The high temperature cooling water flowing through the humidifier **5** is then led via a cooling water recycling pipeline **63** to the cooling water unit **61** and be cooled thereat. The water pressurizing unit **64** applies pressure to the cooling water in the water cooling system **6,** so as to increase the flow rate of the cooling water.

In the above illustrated embodiments, the unreacted oxygen discharge pipeline **33** is simply provided to lead the unreacted oxygen to the gas mixing device **42** for mixing with the unreacted hydrogen and thereby reduces the concentration of the unreacted hydrogen. In practical application of the present invention, the unreacted oxygen may be directly discharged from the fuel cell stack **1** via the oxygen outlet port **14** into the ambient air, while the oxygen for mixing with the unreacted hydrogen in the gas mixing device **42** may be supplied directly from the ambient air by, for example, providing an additional air inlet port on the gas mixing device **42.**

The hydrogen source **2** and the oxygen source **3** are simply provided to supply reactant gases for the fuel cell stack **1;** wherein the hydrogen source **2** may be a hydrogen storage alloy or a hydrogen tank, and the oxygen source **3** may be an oxygen tank or an air blower. However, the hydrogen and oxygen sources **2, 3** may also be any other known types of gas sources.

The gas mixing device **42** is simply provided for mixing the unreacted hydrogen and oxygen. In practical application of the present invention, the gas mixing device **42** may be a gas mixing chamber, or a three-way union.

The unreacted hydrogen discharge control unit **43** is also provided simply for controlling the flow of the discharged unreacted hydrogen. Therefore, the unreacted hydrogen discharge control unit **43** may be a throttle valve, an electromagnetic valve, or any other known types of controlling units, so long as these valves and units provide equivalent function and effect.

In the illustrated embodiments of the present invention, the oxygen source and the hydrogen source are provided mainly to supply oxygen and hydrogen needed by the fuel cell stack. Any other known types of oxygen and hydrogen sources providing equivalent function and effect may also be employed in the present invention. For example, the oxygen source may be ambient air and a cooperative blower, or a high-pressure oxygen cylinder or tank; and the hydrogen source may be a high-pressure hydrogen cylinder or tank, or a hydrogen storage alloy.

## Claims

1. A fuel cell system, comprising:
a fuel cell stack (1) including:
a hydrogen inlet port (11) connected to a hydrogen source (2) via a hydrogen supplying pipeline (21), so that hydrogen is supplied from the hydrogen source (2) to the fuel cell stack (1) via the hydrogen supplying pipeline (21) and the hydrogen inlet port (11);
a hydrogen outlet port (12), via which the unreacted hydrogen is discharged from the fuel cell stack (1);
an oxygen inlet port (13) connected to an oxygen source (3) via an oxygen supplying pipeline (32), so that oxygen is fed from the oxygen source (3) via the oxygen supplying pipeline (32) and the oxygen inlet port (13) into the fuel cell stack (1);
an oxygen outlet port (14), via which unreacted oxygen is discharged from the fuel cell stack (1), an unreacted oxygen discharge pipeline (33) being connected at a first end to the oxygen outlet port (14); and
an unreacted hydrogen discharge pipeline (4) connected at a first end to the hydrogen outlet port (12) for leading out the unreacted hydrogen discharged from the fuel cell stack (1) via the hydrogen outlet port (12);
**characterized in that** a humidifier (5) is coupled between the oxygen inlet port (13) and an oxygen source (3), the humidifier (5) including:
an unreacted gas inlet port (51);
an unreacted gas outlet port (52); and
a gas mixing device (42) connected to a second end of the unreacted hydrogen discharge pipeline (4), a second end of the unreacted oxygen discharge pipeline (33), and the unreacted gas inlet port (51) of the humidifier (5), so that the unreacted hydrogen discharged from the hydrogen outlet port (12) and the unreacted oxygen discharged from the an oxygen outlet port (14) are mixed in the gas mixing device (42) to form an unreacted gas mixture, and then the unreacted gas mixture is led to the unreacted gas inlet port (51) of the humidifier (5), and discharged from the unreacted gas outlet port (52).

2. The fuel cell system as claimed in claim 1, wherein the unreacted hydrogen discharge pipeline (4) has a pressurizing unit (41) connected thereto for applying pressure to the unreacted hydrogen in the unreacted hydrogen discharge pipeline (4).

3. The fuel cell system as claimed in claim 1, wherein the hydrogen source (2) is selected from the group consisting of hydrogen storage alloys and a hydrogen tank.

4. The fuel cell system as claimed in claim 1, wherein the oxygen source (3) is selected from the group consisting of an oxygen tank and an air blower.

5. The fuel cell system as claimed in claim 1, wherein the unreacted hydrogen discharge pipeline (4) is connected to the hydrogen supplying pipeline (21) via an unreacted hydrogen recycling pipeline (44), via which a part of the unreacted hydrogen discharged via the hydrogen outlet port (12) is led back to the fuel cell stack (1) and recycled.

6. The fuel cell system as claimed in claim 1, further comprising a water cooling system (6); the water cooling system (6) including a cooling water unit (61) for supplying low temperature cooling water into the fuel cell stack (1) to cool
the same; and the cooling water having been used to cool and then discharged from the fuel cell stack (1) having a high temperature and being led to the humidifier (5) to serve as a hot water source for increasing humidity and temperature of the oxygen supplied from the oxygen source (3) to the humidifier (5).

7. The fuel cell system as claimed in claim 6, wherein the high temperature cooling water led into the humidifier (5) is further led via a cooling water recycling pipeline (63) back to the cooling water unit (61) to be cooled in the cooling water unit (61).

8. The fuel cell system as claimed in claim 1, wherein the humidifier (5) has an oxygen source inlet port (53) connected to the oxygen source (3) via an oxygen supply pipe (31), so that oxygen is supplied from the oxygen source (3) via the oxygen supply pipe (31) and the oxygen source inlet port (53) into the humidifier (5) for humidity regulation.

9. The fuel cell system as claimed in claims 1 or 8, wherein the humidifier (5) has a humidified oxygen outlet port (54) connected to the oxygen inlet port (13) of the fuel cell stack (1) via an oxygen supplying pipeline (32), so that oxygen having been humidified in the humidifier (5) is sent out of the humidifier (5) via the humidified oxygen outlet port (54) and led by the oxygen supplying pipeline (32) into the fuel cell stack (1) via the oxygen inlet port (13).

## Patentansprüche

1. Brennstoffzellensystem umfassend:
einen Brennstoffzellenstapel (1) mit:
einem Wasserstoffeinlasskanal (11), der über eine Wasserstoffversorgungsleitung (21) mit einer Wasserstoffquelle (2) verbunden ist, so dass Wasserstoff von der Wasserstoffquelle (2) über die Wasserstoffversorgungsleitung (21) und den Wasserstoffeinlasskanal (11) dem Brennstoffzellenstapel (1) zugeführt wird;
einem Wasserstoffauslasskanal (12), über den der unreagierte Wasserstoff aus dem Brennstoffzellenstapel (1) abgegeben wird;
einem Sauerstoffeinlasskanal (13), der über eine Sauerstoffversorgungsleitung (32) an einer Sauerstoffquelle (3) angeschlossen ist, so dass Sauerstoff von der Sauerstoffquelle (3) über die Sauerstoffversorgungsleitung (32) und den Sauerstoffeinlasskanal (13) in den Brennstoffzellenstapel (1) eingespeist wird;
einem Sauerstoffauslasskanal (14), über den unreagierter Sauerstoff aus dem Brennstoffzellenstapel (1) abgegeben wird, wobei eine Abgabeleitung für unreagierten Sauerstoff (33) mit einem ersten Ende an dem Sauerstoffauslasskanal (14) angeschlossen ist; und
einer Abgabeleitung für unreagierten Wasserstoff (4), die mit einem ersten Ende mit dem Wasserstoffauslasskanal (12) verbunden ist, um den unreagierten Wasserstoff, der aus dem Brennstoffzellenstapel (1) abgegeben wird, über den Wasserstoffauslasskanal (12) herauszuführen;
**dadurch gekennzeichnet, dass** ein Befeuchter (5) zwischen dem Sauerstoffeinlasskanal (13) und der Sauerstoffquelle (3) angeschlossen ist, wobei der Befeuchter (5) umfasst:
einen Einlasskanal für unreagiertes Gas (51);
einen Auslasskanal für unreagiertes Gas (52); und
eine Gasmischvorrichtung (42), die an einem zweiten Ende der Abgabeleitung für unreagierten Wasserstoff (4), einem zweiten Ende der Abgabeleitung für unreagierten Sauerstoff (33), und dem Einlasskanal für unreagiertes Gas (51) des Befeuchters (5) angeschlossen ist, so dass der unreagierte Wasserstoff, der aus dem Wasserstoffauslasskanal (12) abgegeben wird, und der unreagierte Sauerstoff, der aus dem Sauerstoffauslasskanal (14) abgegeben wird, in der Gasmischvorrichtung (42) miteinander vermischt werden, um eine Mischung aus unreagierten Gasen zu bilden, wobei dann die Mischung aus unreagierten Gasen zu dem Einlasskanal für unreagiertes Gas (51) des Befeuchters (5) geleitet und aus dem Auslasskanal für unreagiertes Gas (52) abgegeben wird.

2. Brennstoffzellensystem nach Anspruch 1, wobei an der Abgabeleitung für unreagierten Wasserstoff (4) eine Druckbeaufschlagungseinheit (41) angeschlossen ist, um Druck auf den unreagierten Wasserstoff in der Abgabeleitung für unreagierten Wasserstoff (4) auszuüben.

3. Brennstoffzellensystem nach Anspruch 1, wobei die Wasserstoffquelle (2) aus der Gruppe ausgewählt ist, die Wasserstoffspeicherlegierungen und einen Wasserstofftank umfasst.

4. Brennstoffzellensystem nach Anspruch 1, wobei die Sauerstoffquelle (3) aus der Gruppe ausgewählt ist, die einen Sauerstofftank und ein Luftgebläse umfasst.

5. Brennstoffzellensystem nach Anspruch 1, wobei die Abgabeleitung für unreagierten Wasserstoff (4) mit der Wasserstoffversorgungsleitung (21) über eine Rückführleitung für unreagierten Wasserstoff (44) verbunden ist, über die ein Teil des unreagierten Wasserstoffs, der über den Wasserstoffauslasskanal (12) abgegeben wird, zurück in den Brennstoffzellenstapel (1) geleitet und zurückgeführt wird.

6. Brennstoffzellensystem nach Anspruch 1, weiter umfassend ein Wasserkühlsystem (6), das eine Wasserkühleinheit (61) umfasst, um in dem Brennstoffzellenstapel (1) Kühlwasser mit niedriger Temperatur bereit zu stellen, um diesen zu kühlen; wobei das Kühlwasser, dass zum Kühlen benutzt und anschließend aus dem Brennstoffzellenstapel (1) abgegeben wird, eine hohe Temperatur hat und dem Befeuchter (5) zugeführt wird, um als Heißwasserquelle zum Erhöhen der Luftfeuchtigkeit und Temperatur des von der Sauerstoffquelle (3) dem Befeuchter (5) zugeführten Sauerstoffs zu dienen.

7. Brennstoffzellensystem nach Anspruch 6, wobei das Kühlwasser mit hoher Temperatur, das in den Befeuchter (5) geleitet wurde, weiter über eine Kühlwasserrückführleitung (63) zurück in die Kühlwassereinheit (61) geleitet wird, um in der Kühlwassereinheit (61) gekühlt zu werden.

8. Brennstoffzellensystem nach Anspruch 1, wobei der Befeuchter (5) einen Sauerstoffquelleneinlasskanal (53) aufweist, der über eine Sauerstoffversorgungsleitung (31) an der Sauerstoffquelle (3) angeschlossen ist, so dass Sauerstoff von der Sauerstoffquelle (3) über die Sauerstoffversorgungsleitung (31) und den Sauerstoffquelleneinlasskanal (53) in den Befeuchter (5) zur Luftfeuchtigkeitsregulierung bereitgestellt wird.

9. Brennstoffzellensystem nach einem der Ansprüche 1 oder 8, wobei der Befeuchter (5) einen Auslasskanal für befeuchteten Sauerstoff (54) aufweist, der an dem Sauerstoff einlasskanal (13) des Brennstoffzellenstapels (1) über eine Sauerstoffversorgungsleitung (32) angeschlossen ist, so dass Sauerstoff, der in dem Befeuchter (5) befeuchtet wurde, aus dem Befeuchter (5) über den Auslasskanal für befeuchteten Sauerstoff (54) herausgeleitet und über die Sauerstoffversorgungsleitung (32) über den Sauerstoffeinlasskanal (13) in den Brennstoffzellenstapel (1) geleitet wird.

## Revendications

1. Un système de piles à combustible, comprenant :
un empilement de piles à combustible (1) incluant :
un orifice d'entrée d'hydrogène (11) connecté à une source d'hydrogène (2) par une canalisation fournissant de l'hydrogène (21), de sorte que l'hydrogène est fourni par une source d'hydrogène (2) à un empilement de piles à combustible (1) par le biais d'une canalisation fournissant de l'hydrogène (21) et de l'orifice d'entrée d'hydrogène (11) ;
un orifice de sortie d'hydrogène (12), par lequel l'hydrogène non réagi est déchargé par un empilement de piles à combustible (1) ;
un orifice d'entrée d'oxygène (13) connecté à une source d'oxygène (3) par une canalisation fournissant de l'oxygène (32), de sorte que l'oxygène est alimenté par une source d'oxygène (3) par le biais d'une canalisation fournissant de l'oxygène (32) et de l'orifice d'entrée d'oxygène (13) dans l'empilement de piles à combustible (1) ;
un orifice de sortie d'oxygène (14), par le biais duquel l'oxygène non réagi est déchargé par l'empilement de piles à combustible (1), une canalisation de décharge d'oxygène non réagi (33) étant connectée à une première extrémité à l'orifice de sortie d'oxygène (14) ; et
une canalisation de décharge d'hydrogène non réagi (4) connectée à une première extrémité à l'orifice de sortie d'hydrogène (12) pour faire sortir l'hydrogène non réagi déchargé par l'empilement de piles à combustible (1) par le biais de l'orifice de sortie d'hydrogène (12) ;
**caractérisé en ce qu'**un humidificateur (5) est accouplé entre l'orifice d'entrée d'oxygène (13) et une source d'oxygène (3), l'humidificateur (5) incluant :
un orifice d'entrée de gaz non réagi (51) ;
un orifice de sortie de gaz non réagi (52) ; et
un dispositif de mélange de gaz (42) connecté à une deuxième extrémité de la canalisation de décharge d'hydrogène non réagi (4), une deuxième extrémité de la canalisation de décharge d'oxygène non réagi (33) et l'orifice d'entrée de gaz non réagi (51) de l'humidificateur (5) de sorte que l'hydrogène non réagi déchargé par le orifice de sortie d'hydrogène (12) et l'oxygène non réagi déchargé par l'orifice de sortie d'oxygène (14) sont mélangés dans le dispositif de mélange de gaz (42) pour former un mélange de gaz non réagi, puis le mélange de gaz non réagi est conduit à l'orifice d'entrée de gaz non réagi (51) de l'humidificateur (5) et déchargé par l'orifice de sortie de gaz non réagi (52).

2. Le système de piles à combustible selon la revendication 1, où la canalisation de décharge d'hydrogène non réagi (4) a une unité de pressurisation (41) connectée à ladite canalisation pour exercer une pression sur l'hydrogène non réagi qui est dans la canalisation de décharge d'hydrogène non réagi (4).

3. Le système de piles à combustible selon la revendication 1, où la source d'hydrogène (2) est sélectionnée dans le groupe constitué d'alliages de stockage d'hydrogène et d'un réservoir d'hydrogène.

4. Le système de piles à combustible selon la revendication 1, où la source d'oxygène (3) est sélectionnée dans le groupe constitué d'un réservoir d'oxygène et d'une soufflante d'air.

5. Le système de piles à combustible selon la revendication 1, où la canalisation de décharge d'hydrogène non réagi (4) est connectée à la canalisation fournissant de l'hydrogène (21) par le biais d'une canalisation de recyclage d'hydrogène non réagi (44), par le biais de laquelle une partie de l'hydrogène non réagi déchargé par le biais de l'orifice de sortie d'hydrogène (12) est reconduite à l'empilement de piles à combustible (1) et recyclée.

6. Le système de piles à combustible selon la revendication 1, comprenant en plus un système de refroidissement à eau (6), le système de refroidissement à eau (6) incluant une unité de refroidissement à eau (61) pour fournir de l'eau de refroidissement à basse température dans l'empilement de piles à combustible (1) pour refroidir ce dernier, et l'eau de refroidissement ayant été utilisée pour refroidir, puis déchargée par l'empilement de piles à combustible (1) ayant une température élevée et étant conduite à l'humidificateur (5) pour servir de source d'eau chaude pour augmenter l'humidité et la température de l'oxygène fourni par la source d'oxygène (3) à l'humidificateur (5).

7. Le système de piles à combustible selon la revendication 6, où l'eau de refroidissement à température élevée conduite dans l'humidificateur (5) est en plus reconduite par le biais d'une canalisation de recyclage de l'eau de refroidissement (63) à l'unité de refroidissement à eau (61) pour être refroidie dans l'unité de refroidissement à eau (61).

8. Le système de piles à combustible selon la revendication 1, où l'humidificateur (5) a un orifice d'entrée de source d'oxygène (53) connecté à la source d'oxygène (3) par le biais d'un tuyau d'alimentation en oxygène (31) de sorte que l'oxygène est fourni par la source d'oxygène (3) par le biais du tuyau d'alimentation en oxygène (31) et de l'orifice d'entrée de source d'oxygène (53) dans l'humidificateur (5) pour une régulation de l'humidité.

9. Le système de piles à combustible des revendications 1 ou 8, où l'humidificateur (5) a un orifice de sortie d'oxygène humidifié (54) connecté à l'orifice d'entrée d'oxygène (13) de l'empilement de piles à combustible (1) par le biais d'une canalisation fournissant de l'oxygène (32), de sorte que l'ôxygène ayant été humidifié dans l'humidificateur (5) sort de l'humidificateur (5) par le biais de l'orifice de sortie d'oxygène humidifié (54) et est conduit par la canalisation fournissant de l'oxygène (32) dans l'empilement de piles à combustible (1) par le biais de l'orifice d'entrée d'oxygène (13).
